# EUROPEAN PATENT APPLICATION

(11) **EP 1 271 096 A1**
(43) Date of publication of application: **02.01.2003**
(21) Application number: 01830405.5
(22) Date of filing: 18.06.2001
(51) Int. Cl.: G01B 11/06

(54) **Process and device for contactless measurement of the thickness of non-metallic films by using an infrared semiconductor emitter**

(71) Applicant: ELECTRONIC SYSTEMS S.P.A., 28015 Momo (NO) (IT)
(72) Inventor: Chiodini, Sergio, 20087 Robecco sul Naviglio (MI) (IT); Traficante, Francesco, 21052 Busto Arsizio (VA) (IT)
(74) Representative: Carimati, Silvia

(57) **Abstract**

Described herein is an apparatus for carrying out a process for contactless measurement of the thickness of non-metallic films or laminates (4) comprising the steps of:
- emitting infrared radiation pulse-modulated in the 1-6 µm range;
- directing said at least one infrared radiation towards a non-metallic film material (4);
- measuring the amount of said modulated infrared radiation, in at least two sub-bands of the 1-6 µm range, which traverses or is reflected or diffused by said film material (4), said measurement being performed in synchronism with the emission of said infrared radiation; and
- generating an electrical signal proportional to the ratio between the intensity of the infrared radiation in said at least two sub-bands (3);
where the modulated infrared radiation is obtained by modulating a semiconductor device (2) electronically.

## Description

The subject of the present invention is a process for carrying out contactless infrared measurement of the total or partial thickness of single-layer or multilayer non-metallic film materials (so-called laminates).

A further subject of the present invention is an infrared measuring device designed to implement said process for measuring the partial and total thickness of non-metallic films.

A further subject of the present invention is the use of a semiconductor emitter of infrared radiation in a measuring device for contactless measurement of the thickness of single-layer or multilayer non-metallic films.

Contactless infrared measuring devices are today widely used in the sector of the production of film materials - in particular, in the production of laminate materials obtained by coupling layers of polyolefins with layers of polyamide (PA) or polyacrylnitrile (PAN) or ethyl-vinyl-alcohol (EVOH) - for measuring both the total thickness of the laminate and the thickness of each individual layer of the laminate itself.

The wavelengths used for the purposes of measuring thickness are chosen according to the chemical composition of the materials to be measured and correspond to the characteristic wavelengths of absorption of said materials.

Typically the wavelengths used for the purposes of measuring thickness are comprised in the 1-6 µm range, a region of the infrared spectrum characteristic of the wavelengths of absorption of the functional groups.

As is known, an infrared thickness-measuring device comprises, essentially, an emitter of infrared radiation and a detector of infrared radiation, which are set so as to define a space designed to enable the introduction of a film material.

Usually the detector measures the amount of infrared radiation which traverses the material to be measured; alternatively, it may measure the amount of infrared radiation reflected or diffused, then correlating the amount of the radiation measured to the partial or total thickness of the film material.

In the former case, the emitter and the detector are positioned on opposite sides of the space designed to receive the film material to be measured, whereas in the latter case, the emitter and the detector are positioned on the same side of the space designed to receive the film material to be measured.

Infrared detectors used on devices for measuring thickness may be thermal detectors or quantum detectors (of the photoconductive or photovoltaic type).

The infrared radiation transmitted is modulated in pulse mode and the detector is synchronized with the emitter, so as to eliminate any noise components in the signal received.

The use is known of continuous emitters of infrared radiation with a wide spectrum of emission, coupled with appropriate selective narrow-band optical filters, and means for pulse-mode modulation of infrared radiation.

As continuous emitters of infrared radiation the following are, in particular, used: arc lamps, filled with mercury or mercury-xenon mixtures (for wavelengths of between 0.25 and 2.5 µm), quartz-tungsten halogen lamps (for wavelengths of between 0.25 and 2.5 µm), and incandescent and ceramic-resistance lamps (for wavelengths in the 1-40 µm range).

The use of arc lamps, halogen lamps, or incandescent lamps, or else ceramic-resistance lamps involves various problems, and, in particular, the need to provide means for dissipation of the heat produced (typically convective dissipators) to prevent disturbance to the operation of the detecting means and the mechanics of the measuring device.

In turn, the means for dissipation of heat provided on infrared emitters considerably increase the overall dimensions of the measuring devices themselves.

The high time constant of incandescent emitters (typically some tens of seconds) does not enable modulation of the emitter at a sufficiently high frequency to obtain the desired resolution.

To solve the above problem recourse is thus had to mechanical means for modulating the radiation emitted by the source, i.e., to render the signal pulsing.

For pulse modulation of the infrared radiation it is possible to use appropriate rotating disks with windows (choppers), positioned along the optical path of the radiation, which enable a modulation frequency of up to approximately 1 kHz to be attained; however, the use of such disks entails various drawbacks, in particular an increase in the overall dimensions of the device, a greater mechanical complexity, and a greater delicacy of the device itself.

Alternatively, it is possible to use appropriate diapasons which enable a modulation frequency of up to approximately 500 Hz to be reached; however, diapasons are very delicate and are therefore the cause of frequent malfunctioning.

In any case, the low modulation frequency obtained with the mechanical means, along with the need to maintain an acceptable measuring resolution, limits the speed for measuring the thickness profile of the film.

Likewise known are xenon arc lamps which emit infrared radiation in an intermittent way at an adjustable frequency of approximately 100-200 Hz in the 0.2-2.5 µm spectrum.

Given the low frequency of intermittency and the limited working spectrum, xenon lamps find little application in the infrared measurement of thickness.

Furthermore, these lamps call for adequate means of cooling.

The purpose of the present invention is to propose a process for contactless infrared measurement of thickness for non-metallic film materials, and a thickness-measuring device for implementing said process, which enable at least one part of the problems referred to above to be overcome.

The above purpose is achieved by means of a process for measuring thickness in conformance with the specifications of Claim 1, by means of a measuring device according to the specifications of Claim 5 and by means of the use of a semiconductor emitter of infrared radiation in accordance with Claim 10.

Advantageous embodiments of the invention can be obtained in accordance with the dependent claims.

A possible embodiment of the present invention will now be described, purely by way of indicative and non-limiting example, with reference to the attached drawings, in which:

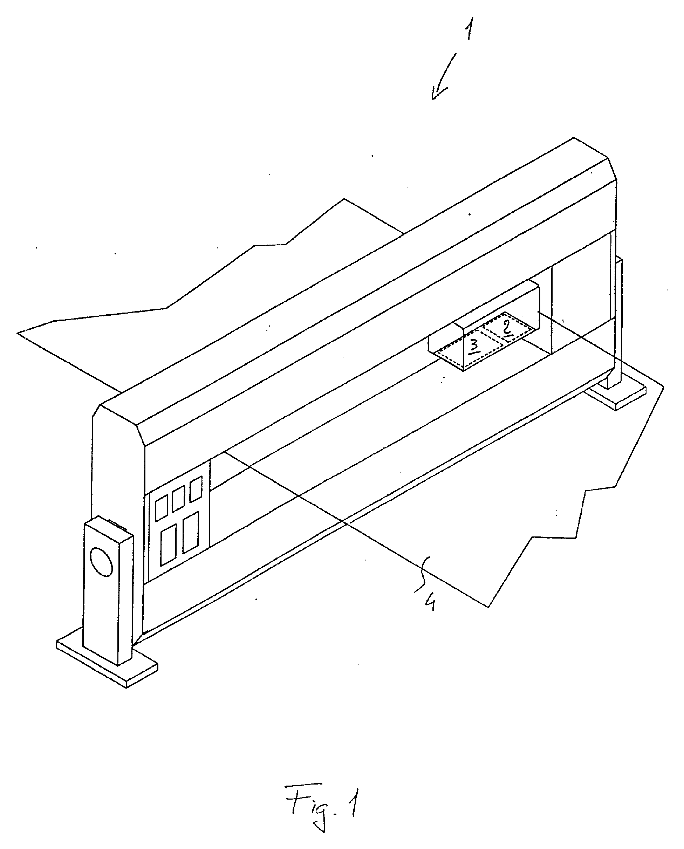

Figure 1 is a schematic view which illustrates a contactless infrared measuring device of the type in which the detector receives the infrared radiation by reflection; and

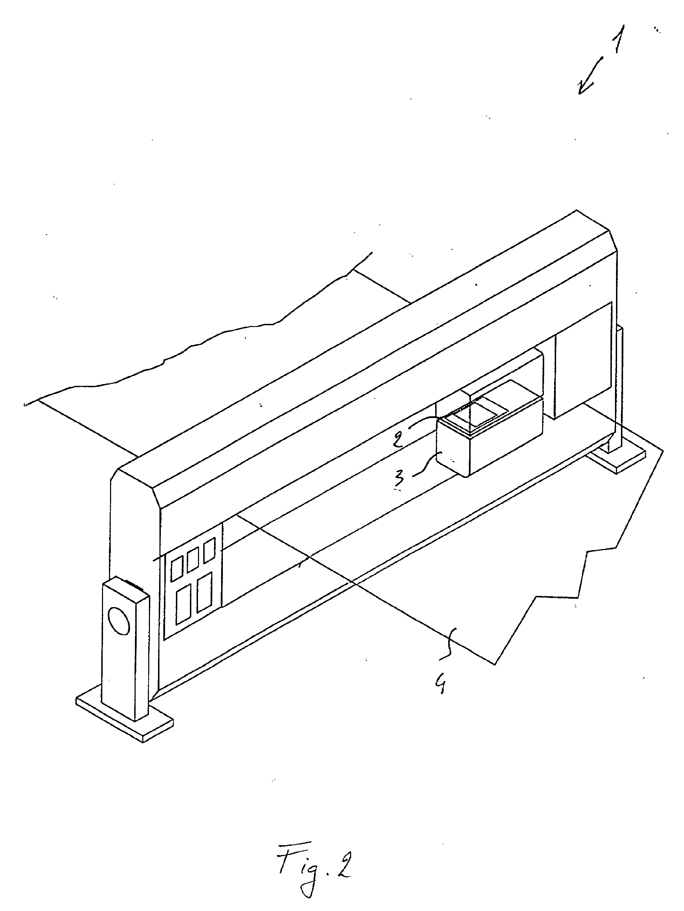

Figure 2 is a schematic view which illustrates a contactless infrared measuring device of the type in which the detector receives the light which traverses the film to be measured.

With reference to the attached plates, the reference number 1 designates as a whole a contactless infrared device for measuring thickness which comprises means 2 for emitting infrared radiation, capable of emitting radiation in the 1-6 µm range, and means 3 for detecting infrared radiation in the said band.

Said emitting means 2 and said detecting means 3 are set so as to define a space for the introduction of a film material 4 that is to undergo measuring of thickness and, according to the preferred embodiment, are capable of moving with reciprocating linear motion, so as to be able to carry out scanning of the film material 4 to be measured throughout its width.

The detecting means 3 comprise at least two distinct sensors, each associated with a narrow-band interferential optical filter, where one filter corresponds to the absorption band of the material to be measured, whilst the other filter corresponds to a reference band remote from the absorption band and hence insensitive to the presence of the material measured.

The detecting means 3 supply an output signal which is a function of the ratio between the intensity in the reference band and the intensity in the absorption band.

According to a possible embodiment, the detecting means 3 consist of a photoconductive detector.

The infrared radiation is modulated in pulse mode, and the measurement of the radiation is made in synchronism with the modulation of the emitter 2, so as to limit the disturbance due to the presence of noise.

A characteristic of the measuring device disclosed is the fact that the infrared-radiation emitting means 2 consist of an electronically modulated semiconductor device.

In fact, semiconductor emitters of infrared radiation present a very small time constant (roughly a few µsec) and hence enable elimination of the traditional means of mechanical modulation.

Preferably the semiconductor device 2 is based on a Class-III, Class-IV or Class-V heterostructure technology which enable coverage of the band from 1 to 6 µm.

Preferably the duration τ of the pulse of the emitter of infrared radiation is less than or equal to 100 µsec, and the period T of the pulse ranges between 3 and 5 msec.

Operating in pulse mode, it is possible to increase the working power of the emitter - even by an order of magnitude with respect to continuous operation; consequently, a signal of higher amplitude is obtained.

Electronic modulation moreover enables elimination of the unwieldy and delicate mechanical devices for modulating infrared emission.

In addition, the heat generated by a semiconductor emitter, optimized for emitting infrared radiation only in the range of interest, is lower than the one produced by a halogen lamp, an arc lamp or a ceramic-resistance lamp, with consequent reduction of the amount of heat to be dissipated.

The reduction of the cooling system likewise enables a significant reduction of the overall dimensions of the measuring device itself to be obtained.

Again, electronic modulation of the semiconductor emitter device enables, if necessary, very high modulation frequencies of the radiation to be reached, roughly up to 10 kHz.

It is thus possible to increase considerably both the film scanning speed and the speed of advance of the film to be measured, and at the same time to maintain a high resolution of the profile measured.

Preferably, both the emitter 2 and the detector 3 are electronically thermoregulated with Peltier-cell thermoelectric cooling devices.

In this way, it is possible to stabilize the emission of radiation of the emitter 2, maintaining the spectrum of emission constant without having to resort to continuous normalizations of the measuring system, and to increase the detecting efficiency of the detector 3.

## Claims

1. A process for contactless measurement of the thickness of non-metallic films or laminates (4) comprising the steps of:
- emitting infrared radiation pulse-modulated in the 1-6 µm range;
- directing said at least one infrared radiation towards a non-metallic film material (4);
- measuring the amount of said modulated infrared radiation, in at least two sub-bands of the 1-6 µm range, which traverses or is reflected or diffused by said film material (4), said measurement being performed in synchronism with the emission of said infrared radiation; and
- generating an electrical signal proportional to the ratio between the intensity of the infrared radiation in said at least two sub-bands (3);
**characterized in that**
- said modulated infrared radiation is obtained by electronic modulation of a semiconductor device (2).

2. The process according to Claim 1, in which said semiconductor device (2) is based on a heterostructure of Class III, IV or V.

3. The process according to Claim 1 or 2 comprising the additional steps of thermoregulation of the semiconductor device (2) with Peltier-cell thermoelectric cooling devices.

4. The process according to Claim 1 or 2 or 3, in which the modulation frequency is comprised in the 0.1-10 kHz range.

5. An infrared measuring device for contactless measurement of the thickness of non-metallic film materials comprising:
- infrared-radiation emitting means (2) capable of emitting pulse-modulated radiation in the 1-6 µm range;
- infrared-radiation detecting means (3) capable of detecting the wavelengths in at least two sub-bands of said 1-6 µm range, said emitting means (2) and said detecting means (3) being set so as to define a space for the introduction of a film material (4) to be measured, said infrared-radiation detecting means (3) being designed for measuring the amount of infrared radiation transmitted or reflected or diffused by a film material (4) set in said space, in said at least two sub-bands, and being capable of generating an electrical signal proportional to the ratio between the intensity of the infrared radiation measured in said at least two sub-bands, said infrared-radiation detecting means (3) operating in synchronism with said infrared-radiation emitting means (2);
**characterized in that**
- said infrared-radiation emitting means (2) consist of a semiconductor element, which is electronically modulated.

6. The measuring device, according to Claim 5, in which said emitting means (2) are based upon a heterostructure of Class III, IV or V.

7. The measuring device, according to Claim 5 or 6, in which said detecting means (3) are of a photoconductive type.

8. The thickness-measuring device, according to Claim 5 or 6 or 7 in which said electronically modulated semiconductor element (2) and/or said detecting means (3) are electronically thermoregulated by means of Peltier-cell thermoelectric cooling devices.

9. The thickness-measuring device, according to Claim 5 or 6 or 7 or 8, in which the modulation frequency of the emitting means of at least one infrared radiation **???**(3) **[?(2)]** is between 0.1 and 10 kHz.

10. Use of a semiconductor emitter of infrared radiation capable of emitting at least radiation with a wavelength comprised in the 1-6 µm range, said semiconductor emitter of infrared radiation being electronically modulated and electronically thermoregulated with Peltier-cell thermoelectric cooling devices, in a contactless infrared measuring device for measuring the partial or total thickness of single-layer or multilayer non-metallic films.
